# EUROPEAN PATENT SPECIFICATION

(11) **EP 2 302 184 B1**
(45) Date of publication and mention of the grant of the patent: **24.12.2014**
(21) Application number: 09754510.7
(22) Date of filing: 25.03.2009
(51) Int. Cl.: F02B 37/10, B01D 53/86, F01N 3/20, F01N 3/24, F02B 37/00, F02B 37/18, F02B 37/24, F02M 25/07

(54) **METHOD AND SYSTEM FOR WARMING UP EXHAUST GAS PURIFYING CATALYST**
VERFAHREN UND SYSTEM ZUM ERWÄRMEN EINES ABGASREINIGUNGSKATALYSATORS
PROCÉDÉ ET SYSTÈME POUR RÉCHAUFFER UN CATALYSEUR DE PURIFICATION DE GAZ D'ÉCHAPPEMENT

(30) Priority: 30.05.2008 JP 2008142458
(43) Date of publication of application: 30.03.2011
(73) Proprietor: IHI Corporation, Tokyo 135-8710 (JP)
(72) Inventor: SHIMIZU, Masahiro, Tokyo 135-8710 (JP); SHINAGAWA, Kazuhiko, Tokyo 135-8710 (JP); MIYAGI, Yoshiyuki, Tokyo 135-8710 (JP)
(74) Representative: Epping, Wilhelm
(86) International application number: PCT/JP2009/055986
(87) International publication number: WO 2009/145002

(56) References cited:
- JP-A- 5 321 682
- JP-A- 10 317 995
- JP-A- 2001 295 701
- JP-A- 2004 100 694
- JP-A- 2004 143 997
- JP-A- 2007 278 252
- US-A1- 2006 236 692

## Description

### TECHNICAL FIELD

The present invention relates to a warm-up method and system for warming up a catalyst for purifying exhaust gas, and more particularly, to a warm-up method and system capable of speeding up activation of the exhaust purification catalyst of an internal combustion engine equipped with a turbocharger.

### BACKGROUND ART

A motor vehicle mounted with an internal combustion engine such as a diesel engine or a gasoline engine uses a catalytic converter containing a catalyst, for example, a three-way catalyst, for purifying the exhaust gas. The reducing ability of such an exhaust purification catalyst is activated at elevated temperatures, and therefore, temperature control is important for the proper functioning of the exhaust purification catalyst. Immediately after the start of the engine, however, the temperature of the exhaust gas is low, so that a certain period of time (warm-up time) is needed to activate the exhaust purification catalyst. To remove the drawback, various methods have been adopted so far, such as a method of using a heater to heat the exhaust purification catalyst and a method of setting a relatively high idling speed immediately after the start of the engine.

Meanwhile, some internal combustion engines are equipped with turbochargers with a view to increasing the engine output. The turbocharger is a device whereby the energy of the exhaust gas is recovered with the use of a turbine to drive a compressor so that compressed air may be supplied to the engine to increase the output. In turbocharged internal combustion engines, the catalytic converter containing an exhaust purification catalyst is generally arranged downstream of the turbocharger. As a consequence of such arrangement of the turbocharged internal combustion engine, the amount of heat supplied to the exhaust purification catalyst is liable to decrease because of the recovery of the exhaust energy by the turbocharger and the heat capacity of the turbocharger itself, requiring a relatively long warm-up time compared with internal combustion engines not equipped with turbochargers. In the case of the turbocharged internal combustion engine, therefore, it is important that the warm-up time be reduced as short as possible.

For example, Japanese Laid-open Patent Publication No. 2007-278252 discloses turbocharger control means whereby a determination is made as to whether or not the catalytic converter needs to be warmed up, and when the warm-up of the catalytic converter is needed, the control means controls the rotating speed of the turbine such that a pressure difference between the exhaust gas flowing into the turbine and the exhaust gas flowing out of the turbine falls within a predetermined range. With the turbocharger control means, when the catalytic converter needs to be warmed up, the control means decreases the pressure difference between the exhaust gas flowing into the turbine of the turbocharger and the exhaust gas flowing out of the turbine so as to fall within the predetermined range, so that the resistance exerted by the turbine against the flow of the exhaust gas lessens, thereby decreasing the exhaust heat energy needed to rotate the turbine. Consequently, the consumption of the exhaust heat energy by the turbine is restrained. Since the exhaust gas of sufficiently high temperature can be supplied to the catalytic converter when the catalytic converter needs to be warmed up, the catalytic converter can be warmed up in a short time, thus improving the warm-up efficiency.

### DISCLOSURE OF THE INVENTION

### Problems to be Solved by the Invention

The turbocharger control means disclosed in Patent Japanese Laid-open Patent Publication No. 2007-278252 is, however, based on the technical concept that loss in the amount of heat generated by the internal combustion engine is reduced as small as possible so that the saved heat energy may be appropriated to the warm-up of the exhaust purification catalyst. There is naturally a limit to the extent to which the loss in the heat amount can be reduced. Also, complicated process is required to control the difference between the turbine inflow and outflow exhaust pressures to a level close to zero in a short period of time. Further, a certain length of time is needed to bring the difference between the turbine inflow and outflow exhaust pressures to a level close to zero, and there is a limit to the extent to which the warm-up time can be shortened.

The present invention was created to solve the above problems, and an object thereof is to provide an exhaust purification catalyst warm-up method and system whereby a warm-up time required to warm up an exhaust purification catalyst is shortened by employing a simple procedure, thus making it possible to speed up the activation of the exhaust purification catalyst.

### Means for Solving the Problems

The object is achieved by the subject-matter of the independent claims.

The present invention provides a warm-up method for warming up an exhaust purification catalyst arranged in an exhaust passage of an internal combustion engine equipped with a turbocharger, the warm-up method being **characterized in that** temperature of an exhaust gas in the exhaust passage is raised by applying counter torque to a turbine of the turbocharger.

When the counter torque is applied, the exhaust gas is recirculated from an upstream side of the turbine back to a downstream side of a compressor of the turbocharger.

The turbocharger includes turbine flow rate adjusting means for adjusting a flow rate of the exhaust gas flowing into the turbine. In this case, when the counter torque is applied to the turbine, the turbine flow rate adjusting means may be controlled such that energy loss of the exhaust gas is lessened, or may be controlled such that the exhaust gas is recirculated from the upstream side of the turbine back to the downstream side of the compressor of the turbocharger.

The present invention also provides a warm-up system for warming up an exhaust purification catalyst arranged in an exhaust passage of an internal combustion engine equipped with a turbocharger, the warm-up system being characterized by comprising: load means coupled to a turbine of the turbocharger; and control means for operating the load means to apply counter torque to the turbine when the exhaust purification catalyst needs to be warmed up.

The control means may control the load means in accordance with an output of a sensor for detecting a rotating speed of the turbine or a pressure in the exhaust passage.

The warm-up system may further comprise: an exhaust gas recirculation device for recirculating an exhaust gas of the engine from an upstream side of the turbine back to a downstream side of a compressor of the turbocharger; and control means for operating the exhaust gas recirculation device to recirculate the exhaust gas when the exhaust purification catalyst needs to be warmed up.

Also, the warm-up system may further comprise: turbine flow rate adjusting means for adjusting a flow rate of the exhaust gas flowing into the turbine; and control means for operating the turbine flow rate adjusting means to lessen energy loss of the exhaust gas when the exhaust purification catalyst needs to be warmed up.

The warm-up system may further comprise: an exhaust gas recirculation device for recirculating the exhaust gas from the upstream side of the turbine back to the downstream side of the compressor of the turbocharger; turbine flow rate adjusting means for adjusting the flow rate of the exhaust gas flowing into the turbine; and control means for operating the exhaust gas recirculation device and the turbine flow rate adjusting means to recirculate the exhaust gas when the exhaust purification catalyst needs to be warmed up.

### EFFECT OF THE INVENTION

With the exhaust purification catalyst warm-up method and system according to the present invention, when the exhaust purification catalyst needs to the warmed up such as at the start of the engine, the turbine of the turbocharger is applied with counter torque, so that the exhaust gas discharged from the internal combustion engine slows down and takes more time to travel, making it possible to raise the temperature of the exhaust gas in a portion of the exhaust passage between the internal combustion engine and the turbine. Accordingly, the exhaust gas of high temperature can be supplied to the exhaust purification catalyst, whereby the warm-up time is shortened and the exhaust purification catalyst is activated in a short time.

According to the present invention, counter torque has only to be applied to the turbine. Thus, complicated process such as pressure control is unnecessary; nevertheless, it is possible to activate the exhaust purification catalyst in a short time by means of a simple control procedure.

### BRIEF DESCRIPTION OF THE DRAWINGS

FIG. 1 schematically illustrates an exhaust purification catalyst warm-up system according to a first embodiment of the present invention;
FIG. 2 illustrates time changes of turbine rotating speed and exhaust gas temperature;
FIG. 3 illustrates a first modification of the first embodiment illustrated in FIG. 1;
FIG. 4 illustrates a second modification of the first embodiment illustrated in FIG. 1;
FIG. 5 schematically illustrates an exhaust purification catalyst warm-up system according to a second embodiment of the present invention;
FIG. 6 schematically illustrates an exhaust purification catalyst warm-up system according to a third embodiment of the present invention;
FIG. 7 schematically illustrates an exhaust purification catalyst warm-up system according to a fourth embodiment of the present invention;
FIG. 8 schematically illustrates an exhaust purification catalyst warm-up system according to a fifth embodiment of the present invention;
FIG. 9 schematically illustrates an exhaust purification catalyst warm-up system according to a sixth embodiment of the present invention; and
FIG. 10 schematically illustrates an exhaust purification catalyst warm-up system according to a seventh embodiment of the present invention.

### BEST MODE OF CARRYING OUT THE INVENTION

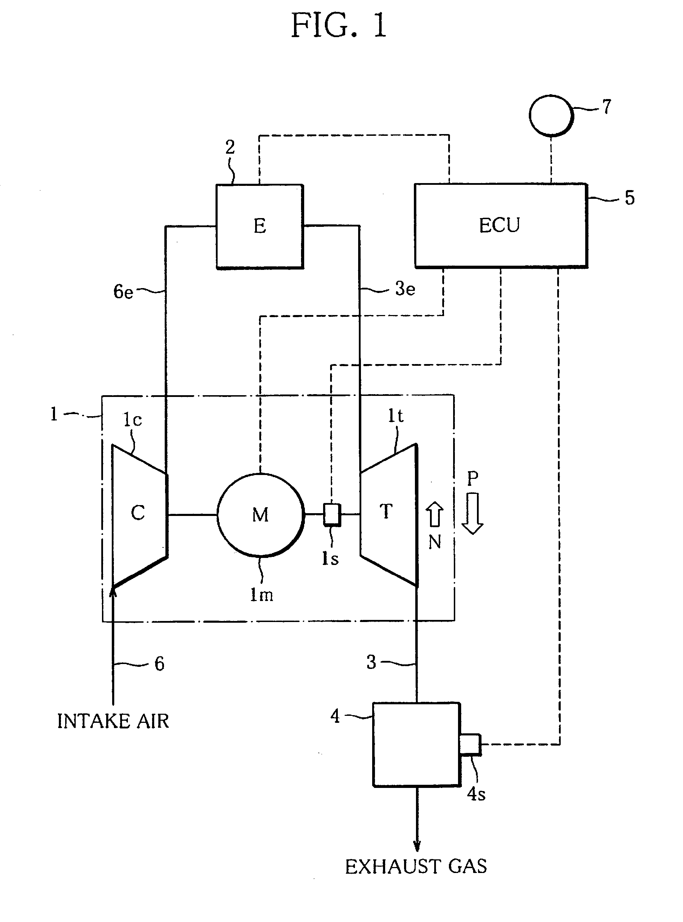

Embodiments of the present invention will be described below with reference to FIGS. 1 through 10. The embodiments shown in figures 1, 3 to 6, 9 and 10 do not form part of the invention but represent background art that is useful for understanding the invention. FIG. 1 illustrates a schematic construction of an exhaust purification catalyst warm-up system according to a first embodiment of the present invention.

The exhaust purification catalyst warm-up system illustrated in FIG. 1 is a system for warming up an exhaust purification catalyst 4 (catalytic converter) which is arranged in an exhaust passage 3 of an internal combustion engine (engine 2) equipped with a turbocharger 1. The warm-up system comprises load means (electric motor 1m) coupled to the turbine 1t of the turbocharger 1, and control means 5 for driving the load means (electric motor 1m) during a warm-up of the exhaust purification catalyst 4 to apply counter torque to the turbine 1t.

The turbocharger 1 is a device whereby exhaust gas energy is recovered by means of the turbine 1t to drive a compressor 1c so that compressed air may be supplied to the engine 2 to increase the engine output. The compressor 1c has an inlet connected to an intake passage 6 for letting in air from the outside, and has an outlet connected to an engine-side intake passage 6e for supplying the compressed air to the engine 2. An intercooler for cooling the compressed air may be arranged in the engine-side intake passage 6e. The turbine 1t has an inlet connected to an engine-side exhaust passage 3e for conveying the exhaust gas discharged from the engine 2, and has an outlet connected to an exhaust passage 3 for emitting the exhaust gas to the outside.

The turbocharger 1 shown in FIG. 1 includes an electric motor 1m which is capable of controlling the rotating speed of the turbine 1t and also capable of operating the turbocharger 1 independently of the flow rate of the exhaust gas supplied to the turbine 1t. Generally, the electric motor 1m is adapted to operate in a manner such that when the flow rate of the exhaust gas is not high enough to attain a required rotating speed of the turbine 1t (e.g., during a start-up operation of the engine 2), the electric motor 1m forcedly rotates the turbine 1t in a direction (in the figure, direction P) to increase the amount of intake air introduced into the compressor 1c. According to the present invention, by contrast, the electric motor 1m is operated so as to apply counter torque to the turbine 1t when the exhaust purification catalyst 4 needs to be warmed up. Specifically, the electric motor 1m is driven so that the turbine 1t may be applied with torque in a direction N opposite to the direction P which is the forward direction of the turbine 1t. As the counter torque is applied to the turbine 1t, the turbine 1t becomes less likely to rotate, constituting resistance to the exhaust gas flowing to the exhaust passage 3. Consequently, the exhaust gas discharged from the engine 2 tends to stagnate in the engine-side exhaust passage 3e and moves more slowly to the exhaust passage 3 on the downstream side of the turbine 1t. By thus making the exhaust gas stay longer in the engine-side exhaust passage 3e, it is possible to effectively raise the temperature of the exhaust gas, so that the temperature of the exhaust gas flowing through the exhaust passage 3 can be raised in a short period of time. Namely, activation of the exhaust purification catalyst can be accelerated by a simple method of applying counter torque to the turbine 1t.

The turbine 1t is provided with a sensor 1s (e.g., rotary encoder or the like) for detecting the rotating speed of the turbine. The sensor 1s is electrically connected to the control means 5, and in accordance with the output from the sensor 1s, the control means 5 controls the electric motor 1m to generate counter torque such that the rotating speed of the turbine 1t becomes equal to a predetermined rotating speed. Since the start-up operation of the engine 2 is a rated operation, the amount of counter torque to be applied to the turbine 1t may be set in advance according to the type or size of the engine 2 or turbocharger 1, thereby omitting the sensor 1s.

The engine 2 is, for example, a diesel engine or gasoline engine mounted on a motor vehicle or the like. The amount of the compressed air to be supplied and the amount of the fuel to be supplied are controlled in accordance with operating conditions of the engine 2. Such control operation is carried out by an electronic control unit (ECU) mounted on the vehicle. Operation of the engine 2 is controlled by means of air-fuel ratio (air mass/fuel mass). During normal operation, for example, the air-fuel ratio is controlled to a ratio close to the stoichiometric air-fuel ratio (with which the reaction of oxygen in the air with fuel takes place with neither of the two being too much or deficient) to cause the exhaust purification catalyst 4 to function effectively. In some cases, the air-fuel ratio is controlled to a ratio (economical air-fuel ratio) higher than the stoichiometric air-fuel ratio in order to improve the fuel efficiency as well as to reduce toxic substances contained in the exhaust gas. Also, at the start of the engine 2, the air-fuel ratio is controlled to produce a relatively rich air-fuel mixture so as to increase the engine output. The electronic control unit (ECU) serves also as the control means 5 of the warm-up system of the present invention.

The exhaust purification catalyst 4 is, for example, a three-way catalyst. The three-way catalyst is a catalyst for removing toxic substances (mainly, hydrocarbons, carbon monoxide, and nitrogen oxides) contained in the exhaust gas. The exhaust purification catalyst 4 to be used in the present invention is, however, not limited to the three-way catalyst. The catalytic converter containing the exhaust purification catalyst 4 is provided with a detector 4s for detecting activation of the exhaust purification catalyst. The detector 4s is, for example, a thermometer or an oxygen concentration detector. Where a thermometer is used as the detector 4s, it is determined whether or not the temperature detected by the thermometer has reached a temperature at and above which the exhaust purification catalyst 4 is activated (in the case of the three-way catalyst, 200 to 300°C). Since the temperature of the exhaust purification catalyst 4 is determined by the exhaust gas temperature, the detector 4s may be so positioned as to detect the temperature of the exhaust gas immediately upstream or downstream of the exhaust purification catalyst 4. On the other hand, where an oxygen concentration detector is used as the detector 4s, it is determined based on the output of the detector 4s whether or not the exhaust purification catalyst 4 is functioning properly. In this case, the detector 4s is preferably arranged immediately downstream of the exhaust purification catalyst 4. Alternatively, a detector for detecting the concentration of some other gas than oxygen, such as carbon dioxide, may be used.

The control means 5 is constituted by the aforementioned electronic control unit (ECU). The control means 5 is electrically connected with an ignition key 7 for starting the engine 2 and thus is capable of detecting the start of the engine 2. Also, the control means 5 is electrically connected with fuel supply means of the engine 2 to supply fuel to the engine 2 such that an air-fuel mixture formed in the engine 2 has a desired air-fuel ratio. Further, the control means 5 is electrically connected with the electric motor 1m to control the operation (start and stop, rotating speed, etc.) of the electric motor 1m. The control means 5 is also electrically connected with the detector 4s to determine whether or not the exhaust purification catalyst 4 has been activated. On detecting the start of the engine 2 as manipulation of the ignition key 7, the control means 5 couples the electric motor 1m and the turbine 1t together by a clutch and operates the electric motor 1m such that counter torque is applied to the turbine 1t. The amount of the counter torque applied to the turbine 1t by the electric motor 1m is controlled in accordance with, for example, the output of the sensor 1s. Also, the control means 5 determines on the basis of the signal from the detector 4s whether or not the exhaust purification catalyst 4 has been activated and, if the exhaust purification catalyst 4 is judged to have been activated, stops the electric motor 1m and disengages the clutch.

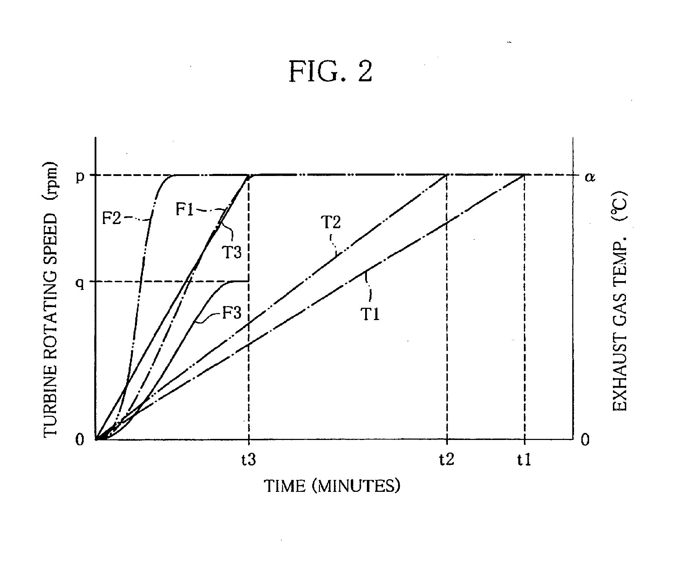

FIG. 2 illustrates time changes of the turbine rotating speed and the exhaust gas temperature, wherein the horizontal axis indicates time (in minutes), the left-hand vertical axis indicates the turbine rotating speed (rpm), and the right-hand vertical axis indicates the exhaust gas temperature (°C). In the graph, data obtained with a conventional warm-up system 1 is indicated by dot-dash lines (F1, T1), data obtained with a conventional warm-up system 2 is indicated by dot-dot-dash lines (F2, T2), and data obtained with the warm-up system of the present invention is indicated by solid lines (F3, T3).

For the conventional warm-up system 1, an exhaust purification catalyst warm-up system was used which was equipped with an ordinary turbocharger having no electric motor coupled to its turbine. With the conventional warm-up system 1, the turbine rotating speed showed a curve F1, indicated by the dot-dash line in FIG. 2, during the warm-up operation, and the idling speed p was set to a relatively high speed (e.g., about 30,000 to 50,000 revolutions). Since in the conventional warm-up system 1, the turbocharger is driven by the exhaust gas discharged from the engine, the turbine rotating speed could not be raised in a short time during the start-up operation of the engine, requiring a certain length of time for the turbine rotating speed to reach the idling speed p. As a result, a long time t1 (e.g., 5 to 6 minutes) was required for the exhaust purification catalyst to reach an activation temperature α (e.g., 200 to 300°C) at and above which the exhaust purification catalyst is activated, as indicated by the dot-dash straight line T1 in FIG. 2.

For the conventional warm-up system 2, an exhaust purification catalyst warm-up system was used which was equipped with an electrically assisted turbocharger having an electric motor coupled to its turbine. With the conventional warm-up system 2, the turbine rotating speed showed a curve F2, indicated by the dot-dot-dash line in FIG. 2, during the warm-up operation. Although the set idling speed p was relatively high as in the conventional warm-up system 1, the turbine rotating speed could be raised in a short time during the start-up operation of the engine because the turbine was actively rotated by the electric motor, whereby the time necessary for the turbine rotating speed to reach the idling speed p could be shortened. In the conventional warm-up system 2, however, the loss of the exhaust gas energy was large as in the case of the conventional warm-up system 1, with the result that a relatively long idling time t2 (e.g., 4 to 5 minutes) was required for the exhaust purification catalyst to reach the activation temperature α (e.g., 200 to 300°C), as indicated by the dot-dot-dash straight line T2 in FIG. 2.

With the exhaust purification catalyst warm-up system according to the present invention illustrated in FIG. 1, the turbine 1t is applied with counter torque during the warm-up operation, and therefore, the turbine rotating speed showed a curve F3 indicated by the solid line in FIG. 2. An idling speed q was set to be lower than the idling speed p set in the conventional warm-up systems. More specifically, the idling speed q is set to approximately 1/3 to 2/3 (e.g., about 10,000 to 30,000 revolutions) of the idling speed p of the conventional warm-up systems. By applying the counter torque to the turbine 1t such that the turbine 1t serves as resistance to the flow of the exhaust gas, it is possible to cause the exhaust gas discharged from the engine 2 to stay in the engine-side exhaust passage 3e and travel slowly toward the exhaust passage 3 on the downstream side of the turbine 1t, whereby the temperature of the exhaust gas in the engine-side exhaust passage 3e can be effectively raised. With the warm-up method according to the present invention, since the temperature of the exhaust gas is elevated by applying the counter torque to the turbine 1t of the turbocharger 1, an idling time t3 necessary for the exhaust purification catalyst 4 to reach the activation temperature α (e.g., 200 to 300°C) can be shortened to about one to two minutes, as indicated by the solid straight line T3 in FIG. 2.

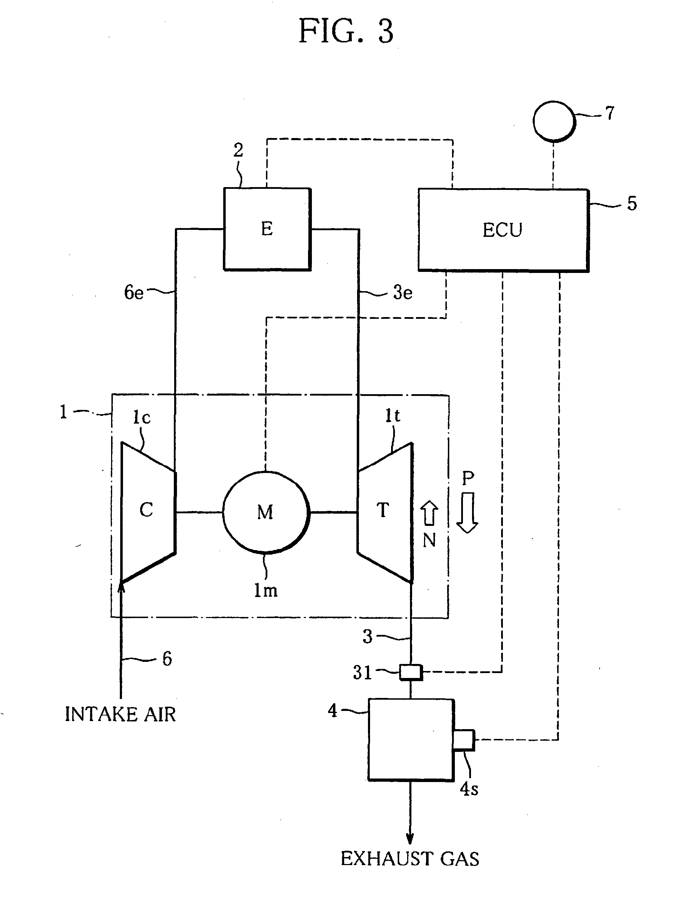

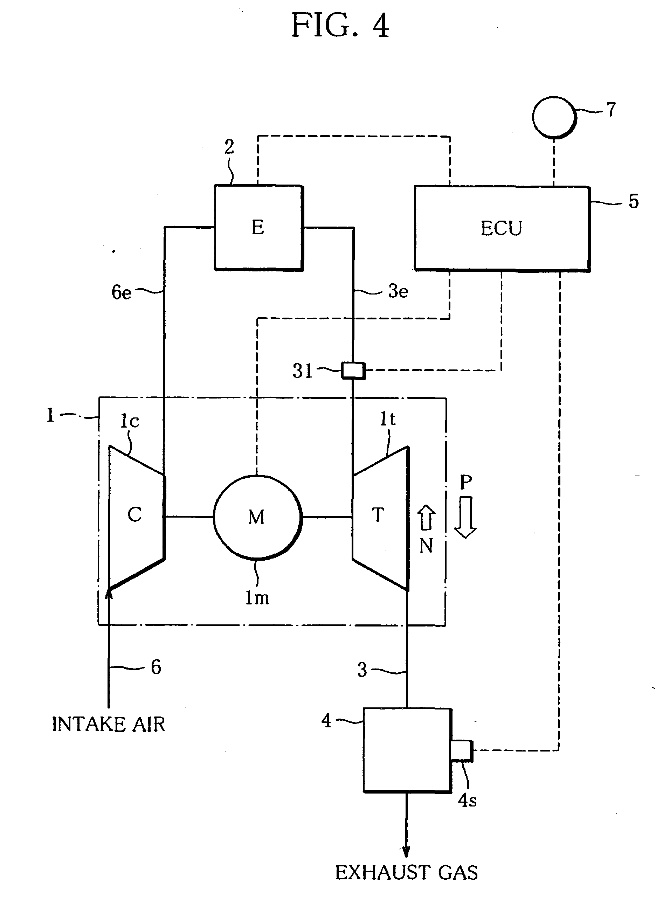

In the above description, the amount of the counter torque is controlled on the basis of the rotating speed of the turbine 1t. Alternatively, the pressure in the exhaust passage 3 (including the engine-side exhaust passage 3e) may be detected, and the amount of the counter torque applied to the turbine 1t may be controlled on the basis of the detected pressure, as described below. FIGS. 3 and 4 show first and second modifications, respectively, of the first embodiment illustrated in FIG. 1. In these figures, like reference numerals refer to like elements already explained with reference to the first embodiment, and description of such elements is omitted.

In the first modification illustrated in FIG. 3, a pressure sensor 31 is arranged in the exhaust passage 3 to detect the pressure of the exhaust gas on the inlet side of the exhaust purification catalyst 4. The sensor 31 is electrically connected to the control means 5, and in accordance with the output from the sensor 31, the control means 5 controls the electric motor 1m. The sensor 31 may be arranged closer to the turbine 1t to detect the pressure of the exhaust gas on the outlet side of the turbine 1t. In the first modification, the control means 5 applies the counter torque to the turbine 1t in such a manner that the exhaust gas pressure, indicated by the output of the pressure sensor 31, is about 10 to 30% lower than that observed when no counter torque is applied to the turbine 1t.

In the second modification illustrated in FIG. 4, the pressure sensor 31 is arranged in the engine-side exhaust passage 3e, which is part of the exhaust passage 3, to detect the pressure of the exhaust gas on the inlet side of the turbine 1t. The sensor 31 is electrically connected to the control means 5, and in accordance with the output from the sensor 31, the control means 5 controls the electric motor 1m. The sensor 31 may be arranged closer to the engine 2 to detect the pressure of the exhaust gas on the outlet side of the engine 2. In the second modification, the control means 5 applies the counter torque to the turbine 1t in a manner such that the exhaust gas pressure, indicated by the output of the pressure sensor 31, is about 10 to 30% higher than that detected when no counter torque is applied to the turbine 1t.

Where the rotating speed of the turbine 1t is restrained, the rotating speed of the compressor 1c lowers, so that the amount of compressed air supplied to the engine 2 decreases. Since the amount of fuel supplied to the engine 2 is correspondingly decreased, the amount of heat energy retained by the exhaust gas lowers. Thus, it is generally thought that restraining the rotating speed of the turbine is not desirable as a means to accelerate the activation of the exhaust purification catalyst 4. The present invention is based on a knowledge contrary to the generally accepted thought, that is, the knowledge that although the amount of the exhaust heat energy imparted by the engine 2 lowers, the use of the turbine 1t as the resistance to the exhaust gas flow makes it possible to effectively raise the temperature of the exhaust gas in a short period of time by accumulating the exhaust heat energy generated by the engine 2. According to the present invention, therefore, not only the activation of the exhaust purification catalyst 4 can be accelerated but the fuel efficiency of the engine 2 can be improved. Also, since the exhaust purification catalyst 4 can be activated in a short time, the heat or thermal mass of the exhaust purification catalyst 4 may be small. Accordingly, the amount of the exhaust purification catalyst 4 used can be reduced, making it possible to cut down costs and also to further shorten the warm-up time.

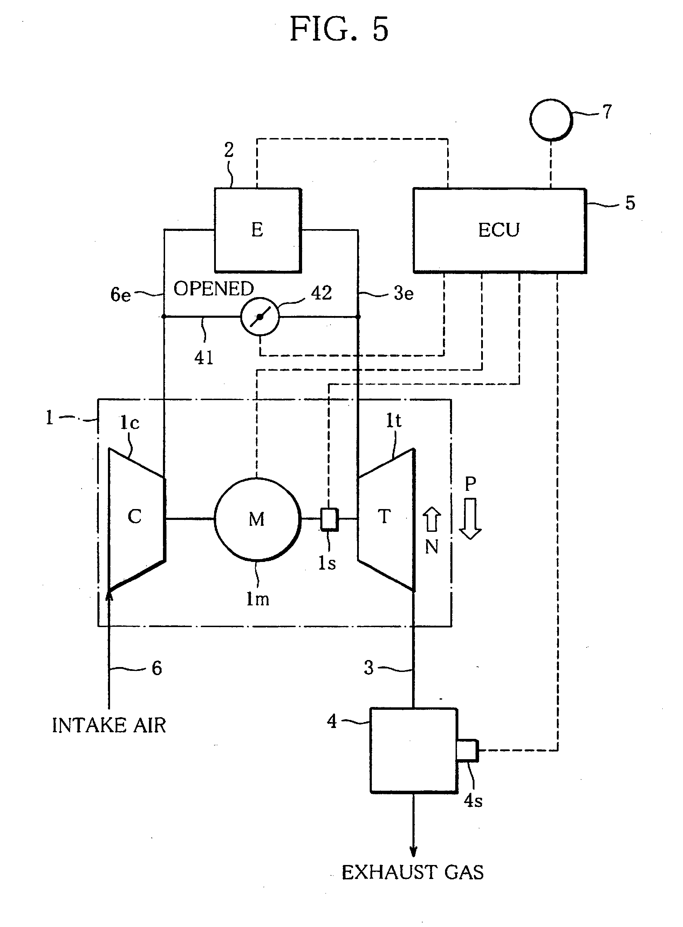

Other embodiments of the present invention will be now described. FIGS. 5 through 10 schematically illustrate exhaust purification catalyst warm-up systems according to second through seventh embodiments, respectively, of the present invention. In these figures, like reference numerals refer to like elements already explained above with reference to the first embodiment, and description of such elements is omitted.

The second embodiment illustrated in FIG. 5 comprises an exhaust gas recirculation (EGR) device for recirculating part of the exhaust gas from the upstream side of the turbine 1t back to the downstream side of the compressor 1c, and control means 5 for operating the exhaust gas recirculation device to recirculate the exhaust gas when the exhaust purification catalyst 4 needs to be warmed up. The exhaust gas recirculation device includes an EGR passage 41 connecting the engine-side exhaust passage 3e to the engine-side intake passage 6e, and an EGR valve 42 inserted in the EGR passage 41. The EGR valve 42 is electrically connected to the control means 5 so as to be opened and closed at desired timing. For example, when the start of the engine 2 is detected through detection of manipulation of the ignition key 7, when a predetermined time has passed after the start of the engine 2, when the rotating speed of the turbine 1t has reached a predetermined speed, or when the pressure in the exhaust passage 3 has increased to a predetermined pressure, the control means 5 opens the EGR valve 42 to recirculate the exhaust gas through the EGR passage 41. By recirculating the exhaust gas in the engine-side exhaust passage 3e back to the intake side, it is possible to effectively raise the temperature of the exhaust gas. Also, on detecting the activation of the exhaust purification catalyst 4, for example, the control means 5 closes the EGR valve 42. Generally, the exhaust gas recirculation device is connected with a cooling device such as a cooler. While the exhaust gas is recirculated in accordance with the present invention, the cooling device is not operated, because the temperature of the exhaust gas needs to be raised.

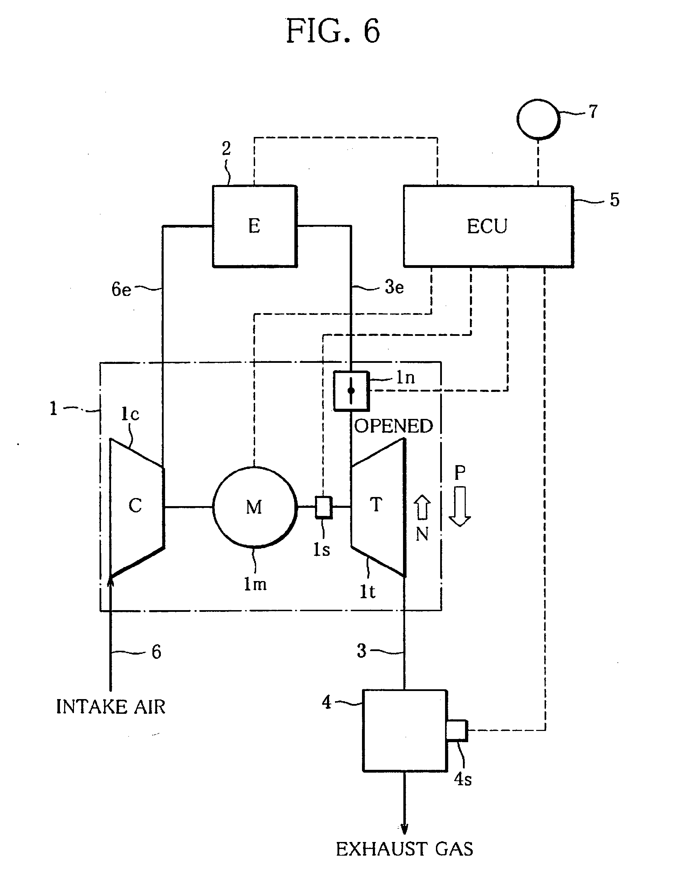

The third embodiment illustrated in FIG. 6 comprises turbine flow rate adjusting means for adjusting the flow rate of the exhaust gas flowing into the turbine 1t, and control means 5 for operating the turbine flow rate adjusting means when the exhaust purification catalyst 4 needs to be warmed up, so as to reduce the energy loss of the exhaust gas due to the turbine flow rate adjusting means. Specifically, a variable nozzle 1n as the turbine flow rate adjusting means is arranged at the exhaust gas inlet of the turbine 1t. Thus, the turbocharger 1 illustrated in FIG. 6 is what is called a variable geometry turbocharger. With the variable geometry turbocharger, the flow rate of the exhaust gas flowing into the turbine 1t can be controlled by opening/closing the variable nozzle 1n, thus controlling the flow rate of the compressed air supplied to the engine 2, whereby high supercharging efficiency is ensured over a wide operating range of the engine 2 with the use of the single turbocharger 1. The variable nozzle 1n represents all types of mechanisms that enable the turbocharger 1 to vary its capacity, and includes a flap type and a vane type, for example. The variable nozzle 1n is electrically connected to the control means 5 so as to be opened and closed at desired timing. During the warm-up operation, the variable nozzle 1n is controlled by the control means 5 so that the energy loss of the exhaust gas attributable to the turbine 1t may be lessened. Specifically, when the start of the engine 2 is detected through detection of manipulation of the ignition key 7, the control means 5 opens, preferably, fully opens the variable nozzle 1n. Where the variable nozzle 1n is opened, the resistance of the variable nozzle 1n to the exhaust gas flow is small, making it possible to reduce the energy loss of the exhaust gas due to the variable nozzle 1n. The turbine flow rate adjusting means may alternatively be a wastegate valve, though not illustrated.

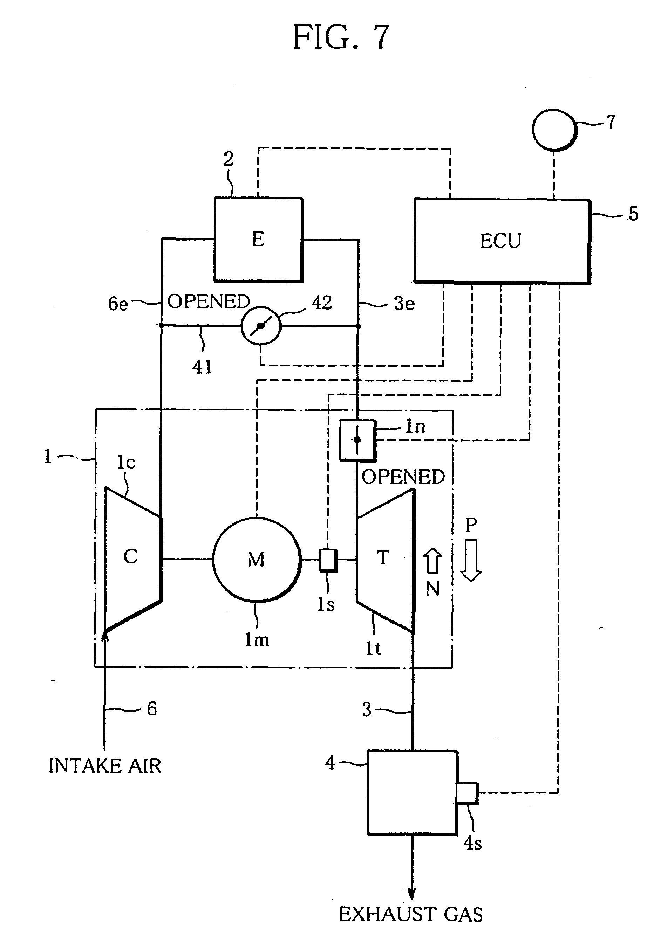

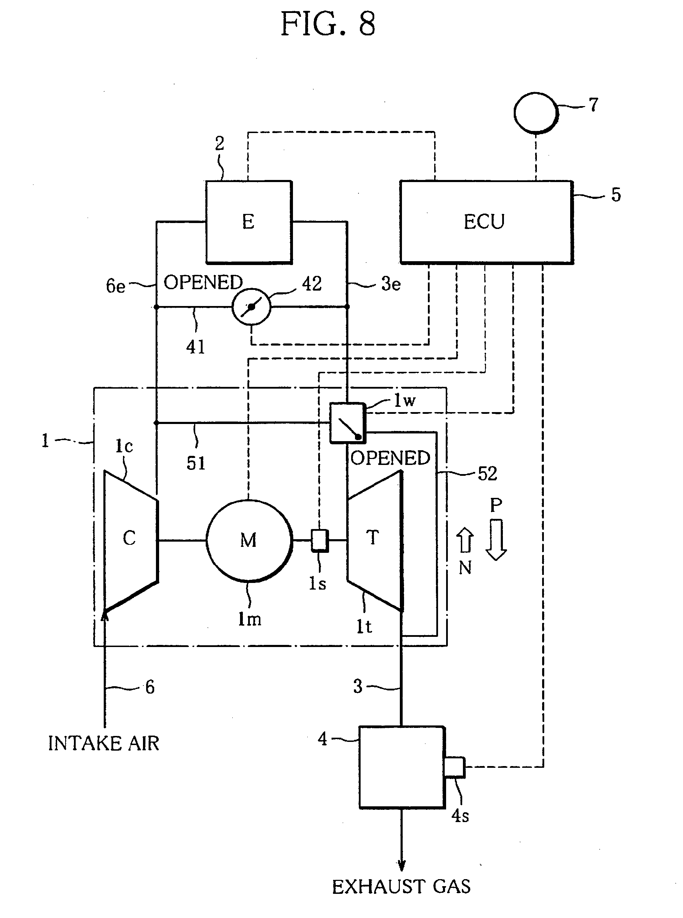

The fourth and fifth embodiments illustrated in FIGS. 7 and 8, respectively, each comprise an exhaust gas recirculation (EGR) device for recirculating part of the exhaust gas from the upstream side of the turbine 1t to the downstream side of the compressor 1c, turbine flow rate adjusting means for adjusting the flow rate of the exhaust gas flowing into the turbine 1t, and control means 5 for operating the exhaust gas recirculation device and the turbine flow rate adjusting means to recirculate the exhaust gas when the exhaust purification catalyst 4 needs to be warmed up. The exhaust gas recirculation device includes an EGR passage 41 connecting the engine-side exhaust passage 3e to the engine-side intake passage 6e and an EGR valve 42 inserted in the EGR passage 41, like the second embodiment, and is controlled by the control means 5 in the same manner as in the second embodiment. On the other hand, the turbine flow rate adjusting means serves to increase the pressure in the engine-side exhaust passage 3e, thereby facilitating the recirculation of the exhaust gas in the engine-side exhaust passage 3e back to the intake side.

The fourth embodiment illustrated in FIG. 7 uses the variable nozzle 1n as the turbine flow rate adjusting means. Immediately after the EGR valve 42 is opened by the control means 5 upon detection the start of the engine 2 in terms of manipulation of the ignition key 7, for example, the pressure in the engine-side exhaust passage 3e cannot be effectively increased by merely applying the counter torque to the turbine 1t. Accordingly, the variable nozzle 1n is first kept in a state close to the closed state, and after the exhaust gas recirculation device becomes capable of functioning properly, the opening of the variable nozzle 1n is increased so as to restrain reduction in the exhaust gas energy. The opening of the variable nozzle 1n may be adjusted by determining whether or not a preset time period has elapsed from the start of the engine 2 or by monitoring the internal pressures of the engine-side exhaust and intake passages 3e and 6e.

The fifth embodiment illustrated in FIG. 8 uses a wastegate valve 1w as the turbine flow rate adjusting means. The wastegate valve 1w includes a branch passage 51 connected to the engine-side intake passage 6e, and a bypass passage 52 connected to the exhaust passage 3 on the downstream side of the turbine 1t. When the pressure of the compressed air flowing through the engine-side intake passage 6e becomes excessively high, the wastegate valve 1w is opened to allow part of the exhaust gas to bypass the turbine 1t, so that the flow rate of intake air flowing into the compressor 1c decreases, lowering the pressure of the compressed air as a result. The wastegate valve 1w is electrically connected to the control means 5 so as to be opened and closed at desired timing. Immediately after the EGR valve 42 is opened by the control means 5 upon detection the start of the engine 2 in terms of manipulation of the ignition key 7, for example, the pressure in the engine-side exhaust passage 3e cannot be effectively increased by merely applying the counter torque to the turbine 1t. Accordingly, the wastegate valve 1w is first kept in a state close to the closed state, and after the exhaust gas recirculation device becomes capable of functioning properly, the opening of the wastegate valve 1w is increased so as to restrain reduction of the exhaust gas energy. The opening of the wastegate valve 1w may be adjusted by determining whether or not a preset time period has elapsed from the start of the engine 2 or by monitoring the internal pressures of the engine-side exhaust and intake passages 3e and 6e.

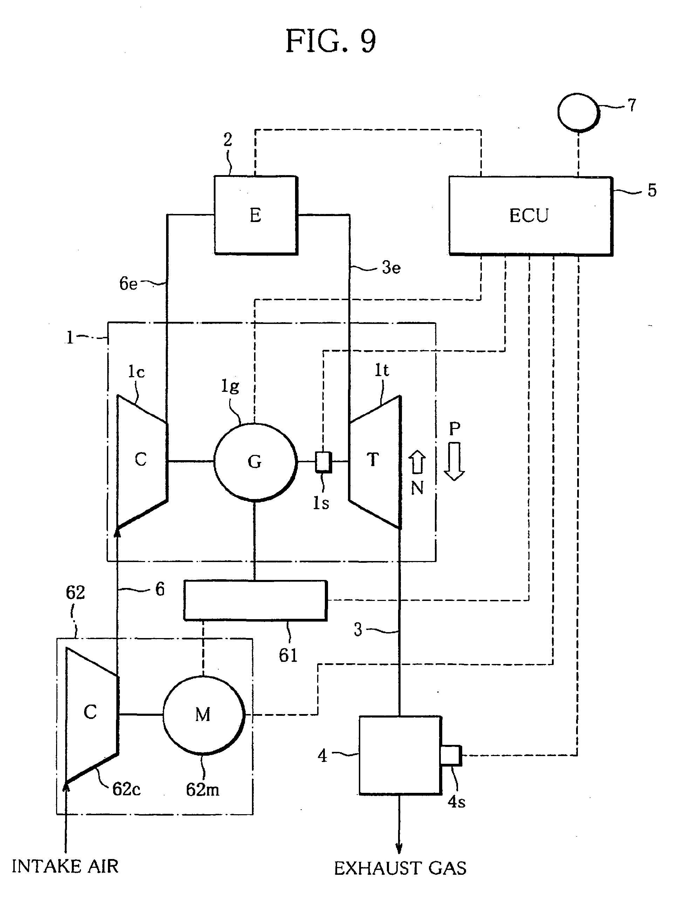

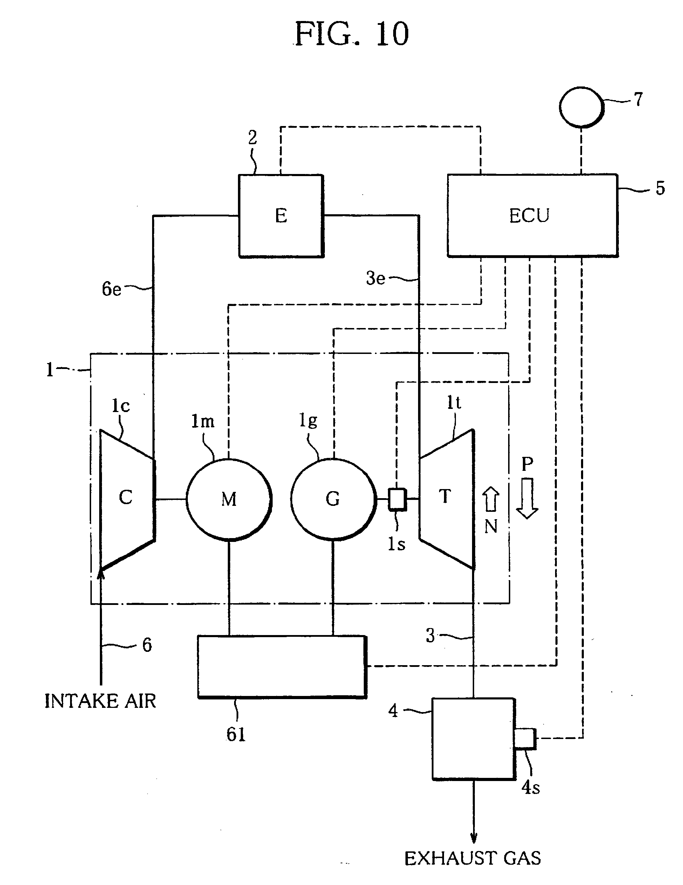

The sixth and seventh embodiments illustrated in FIGS. 9 and 10, respectively, each use an electric generator 1g as the load means. The electric motor 1m used in the first embodiment may be replaced with the electric generator 1g, and also in this case, counter torque can be applied to the turbine 1t as in the first embodiment. The electric generator 1g is connected to a storage battery 61 for storing the electricity generated by the electric generator 1g. The use of the electricity stored in the storage battery 61 is not limited to those mentioned below with reference to the sixth and seventh embodiments.

In the sixth embodiment illustrated in FIG. 9, the turbocharger 1 is associated with an electrically operated booster 62. The booster 62 includes a compressor 62c arranged in the intake passage 6, and an electric motor 62m for driving the compressor 62c. The electric motor 62m is driven by the electricity supplied from the storage battery 61. Also, the electric motor 62m is electrically connected to the control means 5 so as to be driven during the start-up operation etc. of the engine 2. The electrically operated booster 62 ensures that a certain amount of intake air is supplied to the engine even while the turbine 1t is applied with counter torque, whereby the amount of fuel supplied to the engine 2 can be increased to thereby increase the amount of the exhaust heat energy, and as a consequence, the warm-up time for warming up the exhaust purification catalyst 4 can be further shortened.

In the seventh embodiment illustrated in FIG. 10, the turbine 1t and compressor 1c of the turbocharger 1 are disconnected from each other, the turbine 1t is coupled with the electric generator 1g, and the compressor 1c is coupled with the electric motor 1m. The electric generator 1g and the electric motor 1m are connected to the storage battery 61 such that the electricity generated by the electric generator 1g is stored in the storage battery 61 and also that the electricity stored in the storage battery 61 is supplied to the electric motor 1m. With this arrangement, the turbine 1t and the compressor 1c can be operated independently of each other, and this ensures that a certain amount of intake air can be supplied to the engine by the compressor 1c even while the turbine 1t is applied with counter torque. Accordingly, the amount of fuel supplied to the engine 2 can be increased to thereby increase the amount of the exhaust heat energy, whereby the warm-up time required to warm up the exhaust purification catalyst 4 can be further shortened. Also, since the turbine 1t and the compressor 1c are separate from each other, restrictions on the layout of the individual elements can be alleviated, thus providing the advantage of enhanced flexibility.

The present invention is not limited to the foregoing embodiments and may be modified in various ways without departing from the scope of the invention as defined in the claims. For example, in the second through seventh embodiments, the sensor 31 may be provided to detect the pressure in the exhaust passage 3, and in the sixth and seventh embodiments, the exhaust gas recirculation device and/or the turbine flow rate adjusting means (variable nozzle 1n, wastegate valve 1w, etc.) may be additionally used.

### EXPLANATION OF REFERENCE CHARACTERS

- 1: turbocharger
- 1t: turbine
- 1c: compressor
- 1m: electric motor
- 1s: sensor
- 1n: variable nozzle
- 1w: wastegate valve
- 1g: electric generator
- 2: engine
- 3: exhaust passage
- 3e: engine-side exhaust passage
- 4: exhaust purification catalyst
- 4s: detector
- 5: control means
- 6: intake passage
- 6e: engine-side intake passage
- 7: ignition key
- 31: sensor
- 41: EGR passage
- 42: EGR valve
- 51: branch passage
- 52: bypass passage
- 61: storage battery
- 62: electrically operated booster
- 62c: compressor
- 62m: electric motor

## Claims

1. A warm-up method for warming up an exhaust purification catalyst (4) arranged in an exhaust passage (3) of an internal combustion engine (2) equipped with a turbocharger (1) having turbine flow rate adjusting means (1n, 1w), for adjusting a flow rate of an exhaust gas flowing into the turbine (1t) at the exhaust gas inlet,
**characterized in that** when the temperature of an exhaust gas in the exhaust passage is raised by applying counter torque to the turbine (1t) of the turbocharger by load means (1m) coupled to the turbine (1t),
the exhaust gas is recirculated from an upstream side of the turbine back to a downstream side of a compressor (1c) of the turbocharger by an exhaust gas recirculation device (41, 42), and
the turbine flow rate adjusting means is controlled such that the turbine flow rate adjusting means is kept in a state close to the closed state until a preset time period elapses from the start of the internal combustion engine or the pressure of the exhaust gas on an upstream side of the turbine in the exhaust passage is increased to a predetermined pressure so that the exhaust gas recirculation device becomes capable of functioning properly, and increases the state to the opened state so as to lessen energy loss of the exhaust gas after the exhaust gas recirculation device becomes capable of functioning properly.

2. A warm-up system for warming up an exhaust purification catalyst (4) arranged in an exhaust passage (3) of an internal combustion engine (2) equipped with a turbocharger (1),
**characterized by** comprising:
load means (1m) coupled to a turbine (1t) of the turbocharger;
turbine flow rate adjusting means (1n, 1w) for adjusting a flow rate of an exhaust gas flowing into the turbine, provided at the exhaust gas inlet of the turbocharger;
an exhaust gas recirculation device (41, 42) for recirculating an exhaust gas of the engine from an upstream side of the turbine back to a downstream side of a compressor (1c) of the turbocharger; and
control means (5) for operating the load means to apply counter torque to the turbine and operating the exhaust gas recirculation device to recirculate the exhaust gas when the exhaust purification catalyst needs to be warmed up,
the control means is controlled such that the turbine flow rate adjusting means is kept in a state close to the closed state until a preset time period elapses from the start of the internal combustion engine or the pressure of the exhaust gas on an upstream side of the turbine in the exhaust passage is increased to a predetermined pressure so that the exhaust gas recirculation device (41, 42) becomes capable of functioning properly, and increases the state to the opened state so as to lessen energy loss of the exhaust gas after the exhaust gas recirculation device (41, 42) becomes capable of functioning properly.

3. The warm-up system according to claim 2, **characterized in that** the control means (5) controls the load means (1m) in accordance with an output of a sensor (1s, 31) for detecting a rotating speed of the turbine (1t) or a pressure in the exhaust passage (3).

## Patentansprüche

1. Erwärmungsverfahren zum Erwärmen eines Abgasreinigungskatalysators (4), der in einem Abgaskanal (3) eines Verbrennungsmotors (2) angeordnet ist, der mit einem Turbolader (1) ausgestattet ist, welcher über eine Turbinendurchsatz-Einstelleinrichtung (1n, 1w) verfügt, um einen Durchsatz eines in die Turbine (1t) am Abgaseinlass einströmenden Abgases einzustellen,
**dadurch gekennzeichnet, dass**, wenn die Temperatur des Abgases im Abgaskanal ansteigt, indem auf die Turbine (1t) des Turboladers (1) durch eine mit der Turbine (1t) gekoppelte Lasteinrichtung (1m) ein Gegendrehmoment aufgebracht wird,
das Abgas durch eine Abgasrückführungsvorrichtung (41, 42) von einer stromaufwärtigen Seite der Turbine zu einer stromabwärtigen Seite eines Kompressors (1c) des Turboladers zurückgeleitet wird, und
die Turbinendurchsatz-Einstelleinrichtung so gesteuert wird, dass die Turbinendurchsatz-Einstelleinrichtung in einem Zustand nahe dem geschlossenen Zustand gehalten wird, bis ein voreingestellter Zeitraum ab dem Starten des Verbrennungsmotors abgelaufen ist oder der Druck des Abgases auf einer stromaufwärtigen Seite der Turbine im Abgaskanal auf einen vorbestimmten Druck angestiegen ist, so dass die Abgasrückführungsvorrichtung in die Lage versetzt wird, ordnungsgemäß zu funktionieren, und den Zustand auf den offenen Zustand steigert, um so den Energieverlust des Abgases zu verringern, wenn die Abgasrückführungsvorrichtung in die Lage versetzt ist, ordnungsgemäß zu funktionieren.

2. Erwärmungssystem zum Erwärmen eines Abgasreinigungskatalysators (4), der in einem Abgaskanal (3) eines Verbrennungsmotors (2) angeordnet ist, der über einen Turbolader (1) verfügt,
**dadurch gekennzeichnet, dass** es umfasst:
eine Lasteinrichtung (1m), die mit einer Turbine (1t) des Turboladers gekoppelt ist;
eine Turbinendurchsatz-Einstelleinrichtung (1n, 1w) zum Einstellen eines Durchsatzes eines in die Turbine einströmenden Abgases, die am Abgaseinlass des Turboladers vorgesehen ist;
eine Abgasrückführungsvorrichtung (41, 42) zum Zurückleiten eines Abgases des Motors von einer stromaufwärtigen Seite der Turbine zu einer stromabwärtigen Seite eines Kompressors (1c) des Turboladers; und
eine Steuereinrichtung (5) zum Betreiben der Lasteinrichtung in der Weise, dass sie ein Gegendrehmoment auf die Turbine aufbringt, und zum Betreiben der Abgasrückführungsvorrichtung in der Weise, dass sie das Abgas zurückführt, wenn der Abgasreinigungskatalysator erwärmt werden muss,
wobei die Steuereinrichtung so gesteuert wird, dass die Turbinendurchsatz-Einstelleinrichtung in einem Zustand nahe dem geschlossenen Zustand gehalten wird, bis ein voreingestellter Zeitraum ab dem Starten des Verbrennungsmotors abgelaufen ist oder der Druck des Abgases auf einer stromaufwärtigen Seite der Turbine im Abgaskanal auf einen vorbestimmten Druck angestiegen ist, so dass die Abgasrückführungsvorrichtung (41, 42) in die Lage versetzt wird, ordnungsgemäß zu funktionieren, und den Zustand auf den offenen Zustand steigert, um so den Energieverlust des Abgases zu verringern, wenn die Abgasrückführungsvorrichtung (41, 42) in die Lage versetzt ist, ordnungsgemäß zu funktionieren.

3. Erwärmungssystem nach Anspruch 2, **dadurch gekennzeichnet, dass** die Steuereinrichtung (5) die Lasteinrichtung (1m) gemäß einem Ausgang eines Sensors (1s, 31) zum Erfassen einer Drehzahl der Turbine (1t) oder eines Drucks im Abgaskanal (3) steuert.

## Revendications

1. Procédé de réchauffement destiné à réchauffer un catalyseur de purification d'échappement (4) disposé dans un conduit d'échappement (3) d'un moteur à combustion interne (2) équipé d'un turbocompresseur (1) présentant des moyens de réglage de débit de turbine (1n, 1w), destinés à régler un débit d'un gaz d'échappement entrant dans la turbine (1t) au niveau de l'entrée de gaz d'échappement,
**caractérisé en ce que**, lorsque la température d'un gaz d'échappement dans le conduit d'échappement est augmentée par application d'un couple antagoniste à la turbine (1t) du turbocompresseur par des moyens de charge (1m) couplés à la turbine (1t),
le gaz d'échappement est mis en recirculation depuis un côté amont de la turbine pour retourner vers un côté aval d'un compresseur (1c) du turbocompresseur par un dispositif de recirculation de gaz d'échappement (41, 42), et
les moyens de réglage de débit de turbine sont commandés de telle sorte que les moyens de réglage de débit de turbine soient maintenus dans un état proche de l'état fermé jusqu'à ce qu'une période de temps prédéfinie s'écoule depuis le démarrage du moteur à combustion interne ou la pression du gaz d'échappement d'un côté amont de la turbine dans le conduit d'échappement est augmentée à une pression prédéterminée de telle sorte que le dispositif de recirculation de gaz d'échappement devienne capable de fonctionner correctement, et augmente l'état vers l'état ouvert de manière à diminuer une perte d'énergie du gaz d'échappement après que le dispositif de recirculation de gaz d'échappement devient capable de fonctionner correctement.

2. Système de réchauffement destiné à réchauffer un catalyseur de purification d'échappement (4) disposé dans un conduit d'échappement (3) d'un moteur à combustion interne (2) équipé d'un turbocompresseur (1),
**caractérisé en ce qu'**il comprend :
des moyens de charge (1m) couplés à une turbine (1t) du turbocompresseur ;
des moyens de réglage de débit de turbine (1n, 1w) destinés à régler un débit d'un gaz d'échappement entrant dans la turbine, disposés au niveau de l'entrée de gaz d'échappement du turbocompresseur ;
un dispositif de recirculation de gaz d'échappement (41, 42) destiné à faire recirculer un gaz d'échappement du moteur depuis un côté amont de la turbine pour retourner vers un côté aval d'un compresseur (1c) du turbocompresseur ; et
des moyens de commande (5) destinés à faire fonctionner les moyens de charge pour appliquer un couple antagoniste à la turbine et faire fonctionner le dispositif de recirculation de gaz d'échappement pour faire recirculer le gaz d'échappement lorsque le catalyseur de purification d'échappement a besoin d'être réchauffé,
les moyens de commande sont commandés de telle sorte que les moyens de réglage de débit de turbine soient maintenus dans un état proche de l'état fermé jusqu'à ce qu'une période de temps prédéfinie s'écoule depuis le démarrage du moteur à combustion interne ou la pression du gaz d'échappement d'un côté amont de la turbine dans le conduit d'échappement est augmentée à une pression prédéterminée de telle sorte que le dispositif de recirculation de gaz d'échappement (41, 42) devienne capable de fonctionner correctement, et augmente l'état vers l'état ouvert de manière à diminuer une perte d'énergie du gaz d'échappement après que le dispositif de recirculation de gaz d'échappement (41, 42) devient capable de fonctionner correctement.

3. Le système de réchauffement selon la revendication 2, **caractérisé en ce que** les moyens de commande (5) commandent les moyens de charge (1m) conformément à une sortie d'un capteur (1s, 31) destiné à détecter une vitesse de rotation de la turbine (1t) ou une pression dans le conduit d'échappement (3).
